# EUROPEAN PATENT APPLICATION

(11) **EP 0 560 052 A2**
(43) Date of publication of application: **15.09.1993**
(21) Application number: 93101784.2
(22) Date of filing: 05.02.1993
(51) Int. Cl.: A23G 9/02, A23G 9/24

(54) **Coating of confectionery material**

(30) Priority: 11.03.1992 US 849472
(71) Applicant: SOCIETE DES PRODUITS NESTLE S.A., CH-1800 Vevey (CH)
(72) Inventor: Merz, Vernon Ralph, Hannibal, NY 13074 (US); Rauch, Gerald Jack, South Fulton, NY 13069 (US)
(74) Representative: Pate, Frederick George

(57) **Abstract**

A process for coating a frozen confectionery product which comprises applying a gelatin sol to the frozen confectionery product.

## Description

The present invention relates to a method of coating a frozen confectionery product, for example, ice cream.

In a coated ice cream bar, the largest portion of the calories in a typical fat-based coating comes from the fat which accounts for approximately 60% of the coating and such a coating provides about 80 calories per bar. It would be desirable to substantially reduce the amount of calories in a coated ice cream bar by producing a low calorie coating containing substantially no fat.

In United States Patent No 4985263 there is claimed a process for coating a frozen confectionery product which comprises dipping a frozen confectionery product containing calcium ions into a flowable aqueous medium containing an alkali metal alginate to form a coating on the frozen confectionery product, and then spraying an aqueous solution of a calcium salt onto the coating of the coated product. However, in this process there is the disadvantage that as the frozen confectionery product is dipped into the pool of flowable aqueous medium gel formation occurs in the pool owing to the calcium ions of the frozen confectionery product reacting with the alginate in the flowable aqueous medium. This soon causes complete setting of the flowable aqueous medium rendering it useless.

We have now devised a method of coating a frozen confectionery product using a gelatin based medium, gelatin being a product which does not react with calcium ions.

Accordingly, the present invention provides a process for coating a frozen confectionery product which comprises applying a gelatin sol to the frozen confectionery product.

The gelatin sol may be applied by conventional methods, for example, it may be sprayed or enrobed on to the frozen confectionery material or the frozen confectionery material may be dipped into it.

The frozen confectionery material may be any dairy or non-dairy product, for instance, ice cream, iced milk, frozen custard, frozen yoghurt or frozen mousse.

The gelatin sol conveniently contains from 0.5 to 10%, preferably from 1 to 5%, and especially from 1.5 to 3% by weight of gelatin based on the total weight of the gelatin sol. The actual amount of gelatin may vary according to the Bloom strength of the gelatin. We have found that a high Bloom strength is preferred, e.g. from 250-300. The Bloom Test for gel strength is a standard test adopted by the Edible Gelatin Manufacturers Association in which the gel strength is determined by means of a Bloom Gelometer which measures resistance to deformation. For example, a Bloom strength of 200 means that a weight of 200 g is required to depress the surface of a 6-2/3% gelatin gel through a distance of 4 mm (see "Ice Cream" Fourth Edition, W.S.Arbuckle, Chapter 6, Stabilizers and Emulsifiers, page 88, The AVI Publishing Co. Ltd.).

Advantageously, small amounts of a gum, such as Xanthan Gum, Guar, Acacia or Locust Bean Gum, may be present in the gelatin sol to increase the viscosity.

Other ingredients may be present in the gelatin sol including sweeteners, fruit purees, flavourings or colourants, the proportions of which may be determined according to taste and/or appearance. The sweetener may be natural or artificial and may be for instance granulated sugar or aspartame. A natural sweetener may be used in an amount of from 10 to 30% by weight while an artificial sweetener may generally be used in an amount of from 0.01 to 1% by weight based on the weight of the gelatin sol. A variety of possible flavouring agents may be used e.g. strawberry, vanilla or cocoa depending on preference. The amount of flavouring agent may be from 1 to 10% by weight based on the weight of the gelatin sol. When an artificial sweetener is used it is desirable to include a filler (e.g. maltodextrin, polydextrose) to obtain the desired texture and mouthfeel.

The gelatin sol may contain from 60 to 80% and preferably from 70 to 75% by weight of water based on the weight of the gelatin sol.

The gelation sol may be prepared by admixture of the gelatin, together with any other ingredients if present, in hot water, e.g. at a temperature above 65°C, preferably from 70° to 80°C and especially from 71° to 77°C.

The gelatin sol containing sugar and flavourant may be prepared by dry-blending the gelatin with about half the sugar and then mixing in cold water, preferably with agitation before heating to a temperature from 65° to 80°C, preferably with agitation, to dissolve the mixture thoroughly, before adding the remaining sugar and flavourant, preferably with agitation until dissolved. The mixture, after an optional pasteurisation step, may be cooled to refrigeration temperatures until use.

The gelatin sol may applied to the frozen confectionery product by dipping, spraying or enrobing, etc. at a temperature of from 30° to 40°C, preferably from 35° to 38°C. After application to the frozen confectionery product, the gelatin sol may set to a sufficient extent by a combination of gel formation due to heat loss and freezing of the water caused by the contact with the frozen product. The temperature of the gelatin fluctuates between -12°C and -28°C and, advantageously, the coated product may be refrozen to a temperature from -30° to -40°C, for example, in a freezing tunnel to complete the setting process, if necessary.

When the gelatin sol is applied by dipping the frozen confectionery product into it, the temperature of the sol may be from 10°C to 25°C and preferably from 15°C to 22°C. When the gelatin sol is applied by spraying or enrobing, the temperature of the sol may be from 30° to 40°C and preferably from 35° to 38°C. After the coating has set, the product may conveniently be wrapped.

The calorie content of the gelatin sol coating is very much lower than that of a fat-based coating and the gelatin sol coating retains a desirable texture without becoming crystalline.

The present invention also provides a frozen confectionery product having a coating formed from a gelatin sol.

The following Examples further illustrate the present invention. Parts are given by weight.

### Example 1

The following non-fat dairy dessert mix shown in Table 1 was prepared and processed as regular ice cream mix by batch pasteurising at 82°C, holding for 1 minute, homogenising in a first stage at 2250 psi and a second stage at 250 psi and finally maturing for 24 hours at 5°C.

**TABLE I**

| INGREDIENTS | PARTS |
|---|---|
| Sucrose | 12.00 |
| Corn Syrup 42 DE (Dry) | 7.00 |
| Water (from corn syrup) | 1.75 |
| Non-fat dry milk | 6.70 |
| Skim milk | 67.55 |
| Malto Dextrin 10 DE (Maltrin M520) | 4.00 |
| * Gold Star NFB (Grindsted) | 1.00 |
| Artificial Vanilla // 2900 (Grindsted) | 0.10 |
| Colour // 32488 (Bush Boake Allen) | 0.016 |

| | |
|---|---|
| * An emulsifier/stabiliser blend commonly used in dairy dessert centres containing mono- and diglycerides, cellulose gel, cellulose gum, locust bean gum, carrageenan, standardised with maltodextrin. | |

The above dairy dessert was formulated into ice cream bars which were frozen.

A chocolate non-fat coating was prepared by mixing the ingredients shown in Table II in the following manner:

The gelatin was dry blended with half the sugar and the sugar/gelatin blend was then mixed with cold water in a steam-jacketed kettle with agitation and allowed to stand for 5 minutes. The mixture was then heated to 71° to 77°C with agitation until thoroughly dissolved. The remainder of the sugar was dry blended with the cocoa and added to the kettle with the heat off and agitated until thoroughly dissolved before cooling the solution to refrigerated temperature at which it became a solidified gel.

**TABLE II**

| INGREDIENTS | PARTS |
|---|---|
| Water | 72.15 |
| Granulated sugar | 20.79 |
| Cocoa E-11 (18% fat) | 5.00 |
| Knox Gelatin | 2.06 |

The solidified gel was remelted by heat and agitation to 37-38°C where it formed a sol and was sprayed onto the frozen ice cream bars prepared as above using a conventional Sears paint gun, misting it on with 3-4 continuous applications while shaking the gun intermittently to agitate the coating during spraying.

The temperature of the coating dropped on contact with the frozen ice cream bar causing the coating to set and the coated ice cream bar was frozen in a freezer at -38°C.

The gelatin coating had a desirable texture without becoming crystalline and had only 11.60 calories.

### Example 2

An ice cream bar was formulated by following a similar procedure to that described in Example 1. A strawberry puree non-fat coating solution was prepared by mixing the ingredients shown in Table III in the following manner:
The gelatin was dry blended with half the sugar and the sugar/gelatin blend was then mixed with cold water in a steam-jacketed kettle with agitation and allowed to stand for 5 minutes. The mixture was then heated to 71° to 77°C with agitation until thoroughly dissolved. The strawberry puree was added to the kettle with the heat off and mixed throroughly followed by the remaining sugar and mixed until dissolved. The solution was cooled to a refrigerated temperature at which it becomes a solidified gel.

**TABLE III**

| INGREDIENTS | PARTS |
|---|---|
| Strawberry Puree (10% solids) | 50.00 |
| Water | 27.15 |
| Granulated sugar | 20.79 |
| Knox Gelatin | 2.06 |

The solidified gel was remelted by heat and agitation to 37-38°C where it formed a sol and was sprayed onto the frozen ice cream bars using a conventional Sears paint gum, misting it on with 3-4 continuous applications while shaking the gum intermittently to agitate the coating during spraying. The temperature of the coating dropped on contact with the frozen ice cream bar causing the coating to set.

The gelatin sol coating had a desirable texture without becoming crystalline and had only 11.10 calories.

### Example 3

A similar procedure to that described in Example 1 was followed except that the ice cream bar was dipped into the coating at 18°C. The temperature of the coating dropped on contact with the frozen ice cream bar causing the coating to set.

The gelatin sol coating had a desirable texture without becoming crystalline.

### Example 4

A similar procedure to that described in Example 1 was followed except that the ice cream bar was enrobed with the coating and then passed through a freezing tunnel to set the coating.

The gelatin sol coating had a desirable texture without becoming crystalline.

## Claims

1. A process for coating a frozen confectionery product which comprises applying a gelatin sol to the frozen confectionery product.

2. A process according to claim 1 wherein the gelatin sol is applied by spraying or enrobing onto the frozen confectionery material or by dipping the frozen confectionery into the gelatin sol.

3. A process according to claim 1 wherein the gelatin sol is applied by spraying or enrobing at a temperature of from 30° to 40°C.

4. A process according to claim 1 wherein the gelatin sol is applied by dipping the frozen confectionery product into the gelatin sol at a temperature from 10°C to 25°C.

5. A process according to claim 1 wherein after applying the gelatin sol, the coated frozen confectionery product is refrozen to a temperature from -30°C to -40°C.

6. A frozen confectionery product havng a coating formed from a gelatin sol.

7. A frozen confectionery product according to claim 6 wherein the gelatin sol contains from 0.5 to 10% by weight of gelatin based on the weight of the gelatin sol.

8. A frozen confectionery product according to claim 6 wherein the gelatin sol contains a gum.

9. A frozen confectionery product according to claim 6 wherein the gelatin sol contains a sweetener.

10. A frozen confectionery product according to claim 6 wherein the gelatin sol contains a flavour.

11. A frozen confectionery product according to claim 6 wherein the gelatin sol contains from 60 to 80% by weight of water based on the weight of the coating.
